# FASCICULE DE BREVET EUROPEEN

(11) **EP 1 722 987 B1**
(45) Date de publication et mention de la délivrance du brevet: **19.03.2008**
(21) Numéro de dépôt: 05716685.2
(22) Date de dépôt: 14.02.2005
(51) Int. Cl.: B60C 17/02

(54) **CORPS SERVANT DE SUPPORT Á UN PNEUMATIQUE EN CAS DE DÉGONFLAGE ET ENSEMBLE PNEUMATIQUE EQUIPÉ AVEC UN TEL CORPS**
BEI DRUCKVERLUST ALS STÜTZE FÜR EINEN REIFEN WIRKENDER KÖRPER UND MIT DEM KÖRPER VERSEHENER REIFENSATZ
BODY ACTING AS A SUPPORT FOR A TYRE IN THE EVENT OF DEFLATION AND TYRE SET PROVIDED WITH SAID BODY

(30) Priorité: 04.03.2004 FR 0402374
(43) Date de publication de la demande: 22.11.2006
(73) Titulaire: Société de Technologie Michelin, 63000 Clermont-Ferrand (FR); Michelin Recherche et Technique S.A., 1763 Granges-Paccot (CH)
(72) Inventeur: CLOUET, Alain, F-63270 Saint Maurice (FR); AUXERRE, Pascal, F-63130 ROYAT (FR)
(74) Mandataire: Diernaz, Christian
(86) Numéro de dépôt international: PCT/EP2005/050633
(87) Numéro de publication internationale: WO 2005/095126

(56) Documents cités:
- EP-A- 1 338 442
- WO-A-01/53120
- DE-A- 10 164 092

## Description

L'invention concerne les pneumatiques et en particulier les dispositifs limitant la perte de pression résultant d'une perforation desdits pneumatiques.

En usage sur un véhicule équipé de pneumatiques montés sur jante et gonflés à leur pression de gonflage, on constate qu'une perforation d'un flanc d'un pneumatique entraîne une perte très rapide de la pression interne de gonflage, ladite perforation pouvant résulter par exemple d'une agression par un objet extérieur au pneumatique ou d'une rupture de la structure même du pneumatique.

Des ensembles pneumatique/jante ont été développés (voir notamment les brevets US 6092575, US6418992, US 5634993, US 5785781) qui, dans pareille situation, assurent un fonctionnement comparable à celui du pneumatique gonflé, permettant ainsi à l'usager de poursuivre son roulage sur au moins une distance minimale ; en complément, des dispositifs avertisseurs de dégonflement sont prévus dans le véhicule équipé de tels ensembles afin de prévenir l'usager d'une perte de pression.

Une autre alternative consiste à modifier la structure des pneumatiques pour leur permettre, même à l'état dégonflé, de supporter une charge sensiblement équivalente à leur charge nominale sans modification sensible des performances au moins pendant une distance d'utilisation minimale.

Toutefois, tous les véhicules, et notamment les véhicules poids lourd, ne sont pas aujourd'hui équipés de tels ensembles ou pneumatiques. Un objectif de la présente invention est de réduire les effets d'une perforation pour les pneumatiques de type usuel.

Pour faire en sorte que les effets d'une perforation sur des pneumatiques de type usuel soient le moins instantanés possible, il a été proposé dans l'état de la technique des solutions consistant par exemple à disposer à l'intérieur de chaque pneumatique de type usuel un autre pneumatique de dimensions adaptées de façon que, lors d'une perforation du pneumatique ou d'une perte de pression de ce dernier, le pneumatique interne serve de support au pneumatique externe. Il n'en demeure pas moins que la différence de comportement entre l'état du pneumatique initial gonflé et l'état du pneumatique supporté par un pneumatique interne est très importante (ce n'est plus le pneumatique externe qui fonctionne mais le pneumatique interne) et peut occasionner des difficultés d'adaptation de la part du conducteur du véhicule dans cette situation.

On connaît aussi des dispositifs placés dans le pneumatique qui, tout en n'étant pas gonflés en usage normal, peuvent réduire la perte de pression dans le pneumatique lors d'une perforation de ce dernier. Le document publié sous la référence US2002/0121325 décrit un tel dispositif. Ce dispositif comprend un tube toroïdal de dimensions réduites par rapport au volume de la cavité du pneumatique, afin d'éviter le plus possible les interactions entre le pneumatique et le tube en fonctionnement normal (c'est-à-dire pneumatique gonflé), ce tube étant pourvu d'au moins une ouverture pour mettre en communication la cavité délimitée par le tube avec la cavité du pneumatique dans lequel le tube est placé. Lors d'une perforation du pneumatique, la pression de gonflage dans la cavité délimitée par le pneumatique et le tube toroïdal s'échappe tandis que ledit tube ne comportant qu'une petite ouverture conserve une pression quasi inchangée au moins pendant un temps suffisant au le conducteur pour rallier un poste de réparation. L'action de la pression dans le tube, de dimensions appropriées à celles du pneumatique à l'intérieur duquel il est disposé, vient le plaquer contre les bourrelets du pneumatique, ce qui a pour effet de tenir les bourrelets contre les rebords de jante et de limiter la perte de pression dans le tube.

Toutefois, s'il est aisé d'avoir un placage du tube contre les bourrelets dans le cas d'un pneumatique de rapport de forme (hauteur de section /largeur de section) au moins égal à 0.80, ce n'est plus le cas avec un pneumatique dit "taille basse" ("low ratio" en anglais), c'est-à-dire inférieur à 0.80, puisque le tube en se gonflant adopte nécessairement une forme d'équilibre purement pneumatique qui tend à éloigner ledit tube du pneumatique.

Enfin, ce tube ne permet pas d'empêcher un changement de comportement du pneumatique puisqu'il existe un délai plus ou moins long entre le début de la perte de pression de la cavité formée entre le pneumatique et le tube et le moment où le tube est lui même sollicité comme support. Enfin lorsque le pneumatique est supporté par le tube interne gonflé la géométrie du pneumatique est assez sensiblement modifiée par rapport à celle que le même pneumatique adopte lorsqu'il est gonflé et non perforé.
Le document WO 01/53120 A2 montre un ensemble pneu moyen de support correspondant an préambule des revendications 1 et 20.

L'objectif de l'invention est de proposer un dispositif placé à l'intérieur d'un pneumatique qui permette à la fois une réduction de la perte de pression de gonflage du pneumatique ayant une perforation tout en maintenant le pneumatique dans sa forme initiale gonflé. Un autre objectif est de limiter en temps la phase transitoire de passage d'un état du pneumatique gonflé dans lequel aucun dispositif n'interagit avec le pneumatique à un état dans lequel un dispositif selon l'invention entre en action.

Selon l'invention, il est proposé un ensemble formé d'une jante et d'un pneumatique sans chambre (dit "tubeless" en anglais) ayant deux bourrelets destinés à coopérer avec la jante de montage comprenant des bords ou crochets pour limiter l'écartement axial entre les bourrelets du pneumatique, un sommet et des flancs reliant les bourrelets au sommet, ce pneumatique délimitant une cavité avec la jante de montage. À l'intérieur de cette cavité est placé un corps de forme torique délimitant, lorsque le pneumatique est gonflé, une cavité interne audit corps et une cavité externe avec le pneumatique, les cavités interne et externe étant communicantes entre elles de façon que le corps ne soit soumis à aucun effort de gonflage en usage normal (c'est-à-dire pneumatique gonflé à sa pression d'usage).

Ce corps comprend une peau pouvant se déformer facilement sous l'effet d'une pression de gonflage, cette peau étant réalisée en matériau élastomère et renforcée par une armature de carcasse ancrée à deux armatures inextensibles de renforcement circonférentiel dont le diamètre interne est inférieur au diamètre maximal de la jante (correspondant au diamètre des points des crochets de jante radialement les plus à l'extérieur), cette armature de carcasse étant capable de résister aux efforts d'une pression de gonflage correspondant à la pression de gonflage nominale du pneumatique à l'intérieur duquel le corps est placé, ce corps étant caractérisé en ce que, lors d'une perforation du pneumatique, la peau dudit corps a une souplesse appropriée pour se déformer, au moins localement et de façon quasi instantanée, afin d'obstruer au moins temporairement ladite perforation et ainsi limiter, au moins temporairement, la perte de pression de gonflage dans la cavité externe entre le pneumatique et le corps, et assurer ainsi une transition "douce" vers un état d'équilibre dans lequel le corps est déformé et sert de support au pneumatique après perte complète de la pression dans la cavité externe.

Par peau souple, il faut comprendre une peau ayant des rigidités de structure très faibles voire quasi nulles à l'exception de la rigidité d'extension de son armature. Une telle peau ayant la forme d'un tore perd sa forme de tore lorsqu'elle est posée sur une surface plane sans élément de support.

Pour atteindre le résultat cherché, il est préférable que les armatures de renforcement du corps soient dès l'état initial (état dans lequel le pneumatique est gonflé avec le corps placé à l'intérieur) proches des bourrelets du pneumatique de manière à avoir, par écartement axial sous l'action de la pression dans la cavité interne du corps, une action de contact sur les bourrelets et de maintien de ceux-ci en contact avec les rebords de la jante de montage. Dans ce contact entre des parties du corps et l'intérieur du pneumatique, on prévoit que la surface des zones en contact entre le corps et le pneumatique augmente par rapport à la surface de contact qui existe lorsque le pneumatique est dans l'état initial.

Préférentiellement, ces surfaces de contact supplémentaires peuvent être prévues pour assurer une étanchéité suffisante entre le pneumatique et le corps afin de conserver la pression dans ce corps le plus longtemps possible tandis que les surfaces de contact avec le pneumatique à l'état initial comportent des moyens pour laisser passer l'atmosphère de gonflage entre le corps et le pneumatique. Préférentiellement, le corps ne présente que de très faibles surfaces de contact avec le pneumatique en usage normal (c'est-à-dire pneumatique gonflé non perforé) de manière à éviter les interactions entre le pneumatique et le corps (contact de frottement entre eux).

Afin d'avoir l'effet recherché, il faut que le corps adopte localement et quasi instantanément, sous l'action d'une pression interne même faible (c'est-à-dire inférieure ou égale à 0.1 bar), une forme venant obturer le pneumatique perforé. Dans ce but, le volume de la cavité interne du corps dans le pneumatique gonflé doit être approprié pour que l'action d'une faible pression soit efficace. Notamment, on peut prévoir que le corps comprend dans sa cavité une ossature indépendante dudit corps et telle que cette ossature impose une géométrie au corps telle que le volume de la cavité interne soit au moins égal au tiers du volume de la cavité maximale du pneumatique.

Par ossature indépendante dudit corps, il faut entendre que soit cette ossature n'est pas liée audit corps soit qu'elle l'est mais dans une mesure n'empêchant pas la modification de forme du corps à l'intérieur d'un pneumatique soumis brusquement à une perforation.

Dans une variante, le corps a la forme d'un tore ouvert, à la manière d'un pneumatique, l'ouverture étant réalisée sensiblement entre les armatures inextensibles de renforcement circonférentiel dudit corps.

Dans une autre variante, le corps est de forme torique fermée et comprend au moins un orifice pour mettre en communication les cavités interne et externe lorsque ce corps est en place dans un pneumatique et en même temps avoir un effet de confinement de la pression de gonflage dans la cavité interne du corps lors de la perforation du pneumatique.

Dans une autre variante, l'ossature du corps est formée par au moins un ressort à base torique enroulé autour de la jante, la forme prise par ce ressort imposant une géométrie appropriée audit corps afin de délimiter avec la jante un volume de cavité interne approprié pour avoir l'effet recherché. Ce ressort peut être de type à spirale ou bien formé d'une succession d'anneaux pouvant être déformé de façon élastique (c'est-à-dire reprenant sa forme initiale après déformation).

Dans une variante, l'armature de carcasse du corps comporte au moins deux nappes (ou empilements) formées chacune d'une pluralité d'éléments de renforcement, sous forme de fils ou de câbles textiles, faisant, dans la partie radialement la plus à l'extérieur du corps, des angles au moins égaux à 25° avec la direction circonférentielle, les éléments de renforcement des nappes étant croisés entre eux. Ces éléments de renforcement de l'armature de carcasse du corps peuvent être des fils ou câbles de polyamide aromatique.

Par ailleurs et pour assurer une meilleure tenue mécanique du corps lorsque ce dernier sert d'appui au pneumatique, le corps peut comporter dans sa partie sommitale, c'est-à-dire sa partie radialement à l'extérieur, une armature de renfort formée d'une pluralité de renforts sous la forme de fils, câbles continus ou discontinus. Avantageusement, les renforts de la partie sommitale sont disposés selon une direction faisant un angle au plus égal à 10° avec la direction circonférentielle.

L'objet de l'invention est également un corps ayant la forme d'un tore de révolution autour d'un axe de rotation et destiné à être placé à l'intérieur d'un pneumatique pour venir obturer une perforation éventuelle dudit pneumatique et réduire la vitesse de perte de pression dans le pneumatique tout en assurant un support gonflé audit pneumatique. Ce corps comprend une peau, en matériau élastomère élastique pouvant se déformer, renforcée par une armature de carcasse ancrée à deux armatures inextensibles de renforcement circonférentiel intégrées à ladite peau, ces armatures inextensibles ayant un diamètre interne inférieur au diamètre maximal de la jante, cette armature de carcasse étant capable de résister aux efforts d'une pression de gonflage correspondant à la pression de gonflage nominale du pneumatique à l'intérieur duquel le corps est placé.

Ce corps est caractérisé en ce que, sous l'effet d'une pression locale faible, c'est-à-dire proche de 0.1 bar, au moins localement ledit corps vient quasi instantanément en contact avec le flanc perforé du pneumatique et en ce que ledit corps est apte à résister à une pression de gonflage égale à la pression du pneumatique dans lequel il est destiné à être placé.

Par au moins localement, il faut entendre que, vu dans un plan contenant l'axe de rotation et passant par la perforation du pneumatique, le profil du corps est au moins en contact avec le pneumatique à l'endroit de la perforation.

Pour parvenir à un tel effet quasi instantané, il est nécessaire d'adapter la souplesse de la peau pour lui permettre de se déformer au moins localement jusqu'à venir obturer la perforation.

Le corps selon l'invention peut avoir la forme d'un tore ouvert ou fermé. Dans ce dernier cas, il est pourvu d'au moins une ouverture de dimension réduite, cette ouverture étant localisée radialement à l'intérieur des armatures inextensibles de renforcement circonférentiel servant d'ancrage à l'armature de carcasse.

Chaque armature inextensible de renforcement circonférentiel du corps selon l'invention peut être une tringle en polyamide aromatique, ladite tringle permettant de résister aux efforts d'une pression de gonflage égale à la pression de gonflage du pneumatique à l'intérieur duquel ledit corps est placé tout en facilitant la mise en place.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une ensemble selon l'invention comprenant un pneumatique monté sur sa jante de montage et gonflé à sa pression d'utilisation à l'intérieur duquel a été placé un corps ;

La figure 2 montre partiellement le même ensemble que celui montré à la figure 1 dans lequel, suite à une perforation du pneumatique, le corps s'est déformé localement pour venir obturer la perforation et réduire la vitesse de dégonflage du pneumatique ;

La figure 3 montre le même ensemble quelques instants après que toute la pression dans le pneumatique ait été annulé (la cavité externe est alors à la pression atmosphérique) ;

La figure 4 montre une variante d'ossature d'un corps selon l'invention employé dans l'ensemble des figures 1 à 3 ;

La figure 5 montre une variante selon l'invention selon laquelle l'ossature du corps comprend un ressort annulaire à base torique ;

La figure 6 montre une variante d'ossature permettant d'avoir un corps non gonflé ayant une forme n'est pas symétrique.

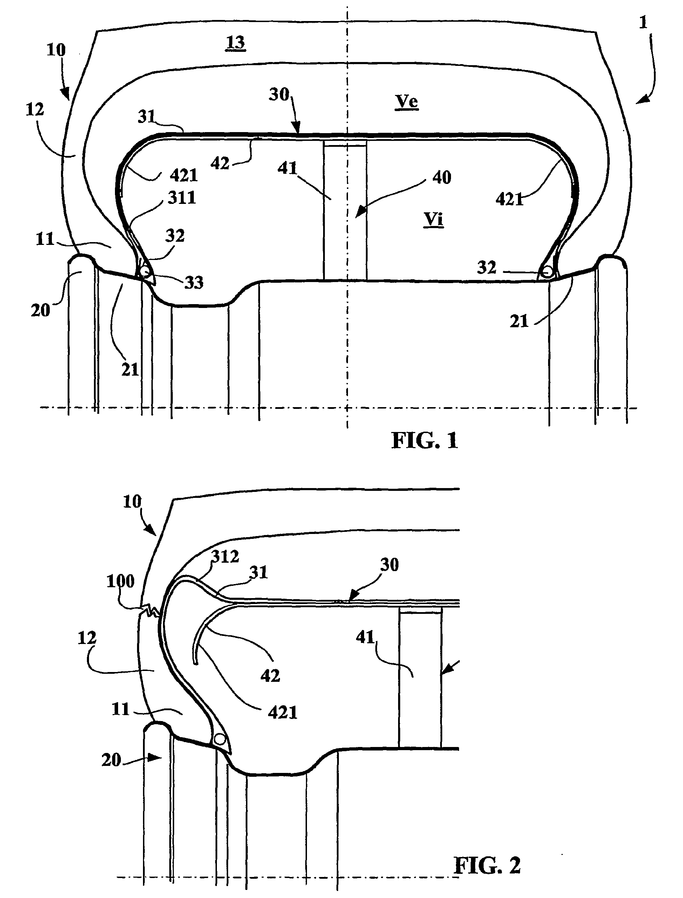

La figure 1 montre un ensemble pneumatique 1 gonflé formé par un pneumatique 10 de dimension 495/45R22,5 (pneumatique de type "drop center") monté sur une jante de montage 20 ayant des sièges inclinés 21 d'un angle égal à 15°. Le pneumatique 10 comprend des bourrelets 11 en contact avec les sièges 21 de la jante 20, des flancs 12 reliés à un sommet 13 dont la partie radialement externe est destinée à venir en contact avec la chaussée au cours du roulage.

À l'intérieur du pneumatique 10 est monté un corps 30 de géométrie torique qui lorsque le pneumatique est gonflé, délimite d'une part, une cavité externe Ve située entre le pneumatique et ledit corps et, d'autre part, une cavité interne Vi située à l'intérieur dudit corps.

Le corps 30 est formé d'une peau 31 en forme de tore ouvert et se terminant à chacune de ses extrémités pas un bourrelet 32. Cette peau 31 est réalisée en caoutchouc renforcé par une armature de carcasse 311 ancrée dans chaque bourrelet 32 par retournement autour d'une armature de renforcement circonférentiel 33 de bourrelet.

L'armature de carcasse 311 est formée, dans le cas présent, de deux nappes armées chacune d'une pluralité de renforts en polyamide et croisés d'une nappe à l'autre. Avant mise en forme, la peau 31 est, par exemple, réalisée sur une forme cylindrique, non montrée, dont le diamètre correspond sensiblement à celui des armatures de renforcement circonférentiel de bourrelet. Les nappes de l'armature de carcasse sont posées sur cette forme cylindrique avec un angle des renforts desdites nappes choisi en fonction de l'angle final voulu. Des essais ont été faits avec des angles à la pose égaux à 55°, 58° et 82° (angle mesuré par rapport à la direction circonférentielle).

Après pose sur cette forme, la peau est conformée jusqu'à prendre une forme telle que montrée à la figure 1 ; les angles des renforts des nappes de l'armature de carcasse sont bien entendu modifiés pendant cette phase de la fabrication de la peau (les angles obtenus sont respectivement 27°, 37° et 78°).

Les bourrelets 32 du corps 30 sont renforcés par des armatures 33 comprenant un ensemble de renforts en polyamide dont la résistance est appropriée pour résister au moins aux efforts exercés par l'armature de carcasse 311 de la peau lorsque celle-ci est gonflée à une pression égale à la pression du pneumatique destiné à être équipé par ledit corps.

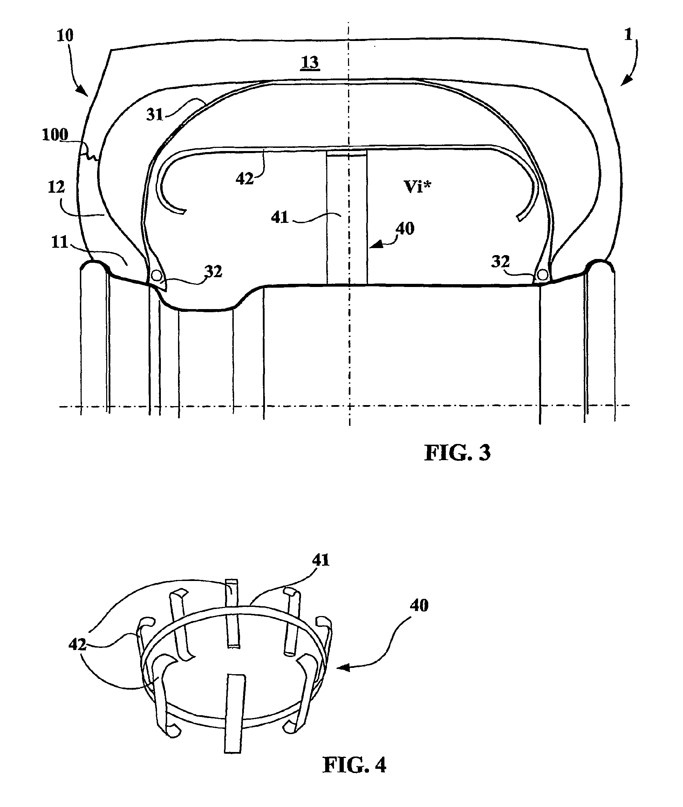

Par ailleurs, le corps 30 comprend, disposée à l'intérieur de la peau 31, une ossature 40 imposant sa géométrie à ladite peau 31 lorsque cette dernière n'est pas gonflée. Cette ossature 40 (montrée avec la figure 4) comprend une bande circonférentielle 41 souple et inextensible circonférentiellement sur laquelle sont fixés plusieurs arceaux 42 rigides de manière à ce que ladite bande 41 soit sensiblement à même distance des extrémités axiales des arceaux 42. La bande circonférentielle 41 est dans le cas présent une bande métallique de largeur égale à 55 mm et d'épaisseur 0.8 mm et de longueur égale à 2.5 m. Cette bande 41 inextensible est suffisamment souple pour pouvoir être fléchie afin de réduire son encombrement et ainsi permettre son introduction à l'intérieur de la peau avant qu'elle ne reprenne sa forme initiale. Dans le cas montré à la figure 4, il est prévu huit arceaux 42 fixés solidairement à la bande circonférentielle et uniformément répartis dans la direction circonférentielle sur la bande 41 ; chaque arceau 42 est moulé selon une géométrie appropriée et est formé d'une résine renforcée par des renforts de polyamide aromatique (on peut également utiliser des renforts de fibre de verre ou de carbone).

Par géométrie appropriée d'un arceau, on entend une géométrie transversale (c'est-à-dire dans la direction de l'axe de rotation de l'ensemble pneumatique/jante) qui est appropriée pour imposer une géométrie de section méridienne moyenne à la peau de manière à pouvoir délimiter les cavités interne et externe. En particulier, chaque arceau 42 comprend une partie retournée 421 à chacune de ses extrémité axiale afin d'éviter d'endommager la peau 31 avec lesdites extrémités.

La longueur hors tout des arceaux 42 est égale à 396 mm.

Dans la configuration montrée avec la figure 1, le pneumatique 10 est gonflé grâce à une valve unique (non représentée) ; des moyens (par exemple, des stries sur les bourrelets du corps) sont prévus pour que la même pression de gonflage s'établisse à la fois dans la cavité interne Vi et dans la cavité externe Ve.

Dans le cas présent, la longueur circonférentielle de la bande 41 de l'ossature 40 est choisie pour que le corps ne vienne pas en contact avec le pneumatique lorsque ce dernier est gonflé et porte sa charge nominale, à l'exception des bourrelets 32 du corps 30 qui sont en contact avec les bourrelets 11 du pneumatique 10.

Préférentiellement, la longueur circonférentielle de la bande 41 est déterminée pour que le volume de la cavité interne Vi soit au moins égal à la moitié du volume de la cavité externe Ve. Encore plus préférentiellement, le volume de la cavité interne Vi est au moins égal au volume de la cavité externe Ve.

Dans cette configuration, il est essentiel que le corps 40 ne soit pas soumis à la pression de gonflage afin qu'il puisse agir efficacement comme cela va être décrit maintenant avec le support de la figure 2.

La figure 2 montre une coupe partielle du pneumatique 10 du côté du flanc 12 ayant une perforation 100 faisant suite à une agression externe au pneumatique. De manière quasi instantanée, le fluide de gonflage présent la cavité externe Ve commence à s'échapper par la perforation 100 et la pression dans la cavité externe Ve tend à diminuer localement (au moins dans un premier temps). Cette variation locale de pression de gonflage dans la cavité externe Ve crée un déséquilibre des pressions entre la cavité externe Ve et la cavité interne Vi. Il s'ensuit que la peau 31 est alors instantanément et localement soumise à cette différence de pression ; compte tenu de sa grande souplesse, elle se déforme localement jusqu'à venir obturer la perforation 100.

Grâce à ce premier mécanisme, il est possible de réduire la vitesse de fuite du fluide de gonflage dans la cavité externe Ve.

Dans les instants qui suivent cet état intermédiaire, et bien que la vitesse de fuite du fluide de gonflage soit réduite, la chute de pression dans la cavité externe Ve va toutefois affecter l'ensemble de ladite cavité. Durant cette chute de pression, il se produit un gonflage progressif de toute la peau 31 qui adopte enfin une géométrie telle que représentée à la figure 3, les bourrelets 32 du corps venant contre les bourrelets du pneumatique.

L'écart de pression entre cavité externe Ve et cavité interne Vi conduit également à plaquer davantage encore les bourrelets 32 du corps 30 contre les bourrelets 11 du pneumatique 10, ce qui assure un maintien des bourrelets 11 du pneumatique sur la jante. Les moyens qui avaient permis le gonflage du pneumatique peuvent être avantageusement prévus pour se refermer lors de cette mise en contact sous pression élevée de façon à limiter la perte de pression par fuite entre le corps 30 et le pneumatique. Il faut noter que même si une fuite existe, elle reste faible et le corps 30 selon l'invention permet d'éviter une perte brutale et instantanée des performances du pneumatique.

La figure 3 montre le pneumatique 10 perforé après que la cavité externe Ve ait atteint une valeur de pression égale à la pression atmosphérique. Dans cet état, la peau 31 (non solidaire de l'ossature 40) s'est déformée de manière à occuper une grande partie de l'intérieur du pneumatique 10. La pression dans la cavité interne Vi est encore suffisante pour maintenir le pneumatique dans une configuration assez proche de celle qui était la sienne avant perforation. Cet état est suffisant pour éviter une dégonflement brutal et une perte instantanée des performances de roulage du pneumatique. Sur cette figure 3, on voit que les arceaux 42 peuvent être fléchis par la peau 31, ce qui justifie la présence des parties retournées 421 afin d'éviter que les extrémités desdits arceaux ne blessent la peau.

Comme le montre encore les figures 2 et 3, la structure de la peau est renforcée de manière appropriée afin d'être en mesure de résister aux efforts imposés à la fois dans la phase intermédiaire d'obturation de la perforation (phase très brève qui suit la perforation) et dans la phase finale de gonflage de la peau à l'intérieur du pneumatique.

Comme variante de réalisation des nappes de l'armature de carcasse, on peut utiliser en lieu et place de renforts en polyamide des renforts en textile ou bien encore des fils métalliques de petit diamètre (c'est-à-dire de diamètre au plus égal à 0.2 mm). On peut aussi employer des fibres discontinues de diamètre au plus égal à 0.2 mm.

Pour assurer une bonne tenue du corps à l'intérieur du pneumatique gonflé non perforé lorsque le pneumatique et le corps sont soumis à des efforts de centrifugation, il est avantageux de renforcer la partie radialement la plus à l'extérieur de la peau avec une armature de sommet comportant une pluralité de renforts de rigidité appropriée. Par exemple, cette armature peut être formée de fils ou câbles textiles orientés circonférentiellement (c'est-à-dire en faisant un angle inférieur ou égal à 10° avec la direction circonférentielle). Des renforts discontinus peuvent également être utilisés que ce soit pour l'armature de sommet ou pour l'armature de carcasse. Des renforts ondulés peuvent aussi être utilisés pour renforcer l'armature de sommet.

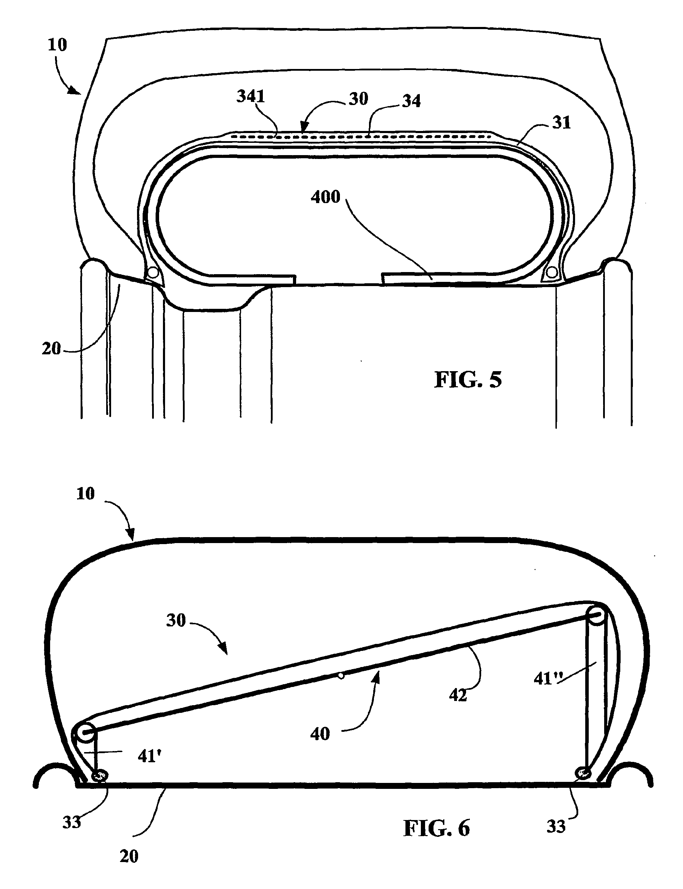

La figure 5 montre une variante d'ossature 400 d'un corps 30 selon l'invention, cette ossature étant formée d'un ressort annulaire 401 à base torique placé à l'intérieur de la peau 31 du corps de manière à conférer audit corps une géométrie telle que ce corps 30 délimite avec la jante 20 un volume de cavité interne et avec le pneumatique 10 un volume de cavité externe, lesdites cavités étant communicantes entre elles. Le ressort 401 employé dans cette variante présente l'avantage de pouvoir être mis en place dans la peau 31 en jouant sur son élasticité de déformation et ainsi de faciliter le montage du corps dans le pneumatique. Cette même élasticité de déformation permet au ressort de reprendre sa géométrie initiale et ainsi d'imposer au corps la géométrie voulue une fois en place dans le pneumatique. En outre, dans cette variante, le corps comprend une partie sommitale 34 renforcée par une armature de renfort 341 formée d'une pluralité de renforts sous la forme de fils ou de câbles continus ou discontinus. Préférentiellement, l'angle moyen desdits renforts de l'armature de renfort de la partie sommitale 34 avec la direction circonférentielle est au plus égal à 10°.

La figure 6 montre, schématiquement, une variante d'ossature permettant d'avoir un corps en usage non gonflé dont la géométrie dans un plan méridien n'est pas symétrique par rapport à un plan médian (plan perpendiculaire à l'axe de rotation et passant à égale distance des bourrelets du corps lorsque ce dernier est en place dans le pneumatique). Par souci de simplification, les mêmes références sont employées ici pour désigner des éléments comparables à ceux de la variante montrée avec les figures 1 à 4.

L'ossature 40 est ici formée d'une pluralité d'arceaux 42 souples disposés transversalement et fixés à leurs extrémités axiales à deux tringles 41', 41" inextensibles circonférentiellement, lesdites tringles 41', 41" ayant des longueurs circonférentielles différentes l'une de l'autre. L'introduction de cette ossature 40 dans une peau 31 d'un corps 30 de profil approprié conduit à l'obtention d'un profil méridien non symétrique par rapport à un plan perpendiculaire à l'axe de rotation. Ainsi, il est possible de rapprocher le profil de la peau 31 d'au moins un flanc du pneumatique.

Par arceau souple, on entend ici qu'un arceau peut fléchir sous un effort faible de manière à permettre le rapprochement axial des tringles inextensibles circonférentiellement après que le pneumatique, à l'intérieur duquel est placé le corps, ait été perforé.

De cette manière, il peut être possible d'augmenter encore l'efficacité du corps selon l'invention en réduisant le temps d'obturation sur le flanc le plus proche ; cette disposition peut être utile lorsqu'il est connu que c'est le flanc orienté vers l'extérieur d'un véhicule qui est le plus sujet à des agressions et donc des perforations.

L'objet de l'invention peut être utilisé dans le cas de pneumatiques de type usuel que ce soit pour des véhicules de tourisme, de poids lourd, hors la route ou pour des avions. Bien entendu, les pneumatiques conçus pour fonctionner même en cas de dégonflement total ou partiel (notamment les pneumatiques intégrant des moyens de roulage sous gonflé ou encore les ensembles montés rappelés en introduction) peuvent être pourvus en outre d'un corps selon l'invention dans le but de réduire la vitesse de perte de pression de gonflage en cas de perforation.

## Revendications

1. Ensemble (1) formé d'un pneumatique (10) sans chambre ("tubeless") monté sur une jante de montage (20), ce pneumatique ayant deux bourrelets (11) destinés à coopérer avec la jante de montage (20) comprenant des bords pour limiter l'écartement axial entre les bourrelets du pneumatique, ce pneumatique ayant en outre un sommet (13) et des flancs (12) reliant les bourrelets (11) au sommet, ce pneumatique délimitant une cavité avec la jante de montage (20) à l'intérieur de laquelle est placé un corps (30) de forme torique délimitant, lorsque le pneumatique est gonflé, une cavité interne audit corps (30) et une cavité externe avec le pneumatique, les cavités interne et externe étant communicantes entre elles de façon que le corps (30) ne soit soumis à aucun effort de gonflage en usage normal (c'est-à-dire pneumatique gonflé à sa pression d'usage), ce corps (30) comprenant une peau (31) en matériau élastomère élastique déformable renforcée par une armature de carcasse (311) ancrée à deux armatures inextensibles de renforcement circonférentiel (33) dont le diamètre interne est inférieur au diamètre maximal de la jante (20), cette armature de carcasse (311) étant capable de résister aux efforts d'une pression de gonflage correspondant à la pression de gonflage nominale du pneumatique à l'intérieur duquel le corps (30) est placé, ce corps (30) étant **caractérisé en ce que**, en présence d'une perforation (100) du pneumatique, la peau (31) se déforme, au moins localement et de façon quasi instantanée, afin d'obstruer au moins temporairement la perforation (100) pour ainsi limiter, au moins temporairement, la perte de pression de gonflage dans la cavité externe entre le pneumatique et le corps, et assurer une transition vers un état d'équilibre dans lequel le corps (30) est déformé et sert de support au pneumatique (10) après perte complète de la pression dans la cavité externe.

2. Ensemble (1) selon la revendication 1 **caractérisé en ce que** le corps (30) est un tore fermé pourvu d'au moins une ouverture pour mettre en communication les cavités interne et externe.

3. Ensemble (1) selon la revendication 1 **caractérisé en ce que** le corps (30) est un tore ouvert sensiblement axialement entre les armatures inextensibles de renforcement circonférentiel (33) dudit corps.

4. Ensemble (1) selon l'une des revendications 1 à 3 **caractérisé en ce que** l'armature de carcasse (311) du corps (30) comporte au moins deux nappes formés chacun d'une pluralité d'éléments de renforcement, sous forme de fils ou de câbles textiles, faisant, dans la partie radialement la plus à l'extérieur du corps, des angles au moins égaux à 25° avec la direction circonférentielle, les éléments de renforcement des nappes étant croisés entre eux.

5. Ensemble (1) selon la revendication 4 **caractérisé en ce que** les renforts de l'armature de carcasse (311) du corps (30) sont des fils ou câbles de polyamide aromatique.

6. Ensemble (1) selon l'une des revendications 1 à 5 **caractérisé en ce que** le corps (30) comporte une partie sommitale (34) radialement vers l'extérieur, ladite partie sommitale comprenant une armature de renfort (341) formée d'une pluralité de renforts sous la forme de fils, de câbles continus ou discontinus.

7. Ensemble (1) selon la revendication 6 **caractérisé en ce que** l'armature de renfort de la partie sommitale (34) du corps (30) comprend une pluralité de renforts disposés selon une direction faisant un angle au plus égal à 10° avec la direction circonférentielle.

8. Ensemble (1) selon l'une des revendications 1 à 7 **caractérisé en ce que** le corps (30) comprend une ossature (40, 400) placée à l'intérieur dudit corps et indépendante dudit corps, ladite ossature ayant pour fonction de faire prendre au corps (30) une forme délimitant un volume de cavité interne au moins égal au tiers du volume de cavité maximale délimité par le pneumatique (10) et sa jante de montage (20).

9. Ensemble (1) selon la revendications 8 **caractérisé en ce que** l'ossature (40) comprend au moins une bande circonférentielle (41) de rigidité appropriée pour conférer au corps (30) une longueur circonférentielle appropriée audit corps et, solidaires de ladite bande (41), une pluralité d'arceaux (42) imposant leur forme au corps (30) dans la direction transversale.

10. Corps (30) de géométrie torique autour d'un axe de rotation et destiné à être placé à l'intérieur d'un ensemble formé d'un pneumatique (10) monté sur une jante de montage (20) pour venir obturer une perforation (100) éventuelle dudit pneumatique (10) et réduire la vitesse de perte de pression dans le pneumatique tout en assurant un support gonflé audit pneumatique, ce corps (30) comprenant une peau (31), en matériau élastomère élastique, renforcée par une armature de carcasse (311) ancrée à deux armatures inextensibles de renforcement circonférentiel (33) intégrées à ladite peau (31), ces armatures inextensibles (33) ayant un diamètre interne inférieur au diamètre maximal de la jante (20), cette armature de carcasse (311) étant capable de résister aux efforts d'une pression de gonflage correspondant à la pression de gonflage nominale du pneumatique à l'intérieur duquel le corps (30) est placé, ce corps étant tel que sous l'effet d'une pression locale inférieure ou égale à 0.1 bar, ledit corps (30) vient quasi instantanément en contact avec le pneumatique (10) à l'endroit de la perforation (100), ledit corps (30) est apte à résister à une pression de gonflage égale à celle du pneumatique (10) dans lequel il est destiné à être placé, ce corps étant
**caractérisé en ce que** le corps (30) est un tore fermé dont la peau (31) est pourvue d'au moins une ouverture de dimension réduite, cette ouverture étant localisée radialement à l'intérieur des armatures inextensibles de renforcement circonférentiel (33) servant d'ancrage à l'armature de carcasse (311).

11. Corps (30) de géométrie torique selon la revendication 10 **caractérisé en ce que** le corps (30) est un tore ouvert axialement entre les armatures inextensibles de renforcement circonférentiel (33) servant d'ancrage à l'armature de carcasse (311).

12. Corps (30) de géométrie torique selon l'une des revendications 10 ou 11 **caractérisé en ce que** l'armature de carcasse (311) du corps (30) comporte au moins deux nappes formées chacune d'une pluralité d'éléments de renforcement, sous forme de fils ou de câbles textiles, orientés sur le corps gonflé selon des directions faisant, avec la direction circonférentielle, des angles au moins égaux à 25°, les éléments de renforcement des empilements étant croisés entre eux.

13. Corps (30) de géométrie torique selon la revendication 12 **caractérisé en ce que** les renforts de l'armature de carcasse (311) du corps sont des fils ou câbles de polyamide aromatique.

14. Corps (30) de géométrie torique selon l'une des revendications 10 à 13 **caractérisé en ce que** le corps (30) comporte une partie sommitale (34) radialement vers l'extérieur, ladite partie sommitale comprenant une armature de renfort (341) formée d'une pluralité de renforts sous la forme de fils ou de câbles continus ou discontinus.

15. Corps (30) de géométrie torique selon la revendication 14 **caractérisé en ce que** l'armature de renfort de la partie sommitale (34) du corps (30) comprend une pluralité de renforts disposés selon une direction faisant un angle au plus égal à 10° avec la direction circonférentielle.

16. Corps (30) de géométrie torique selon l'une des revendications 10 à 15 **caractérisé en ce que** chaque armature inextensible de renforcement circonférentiel (33) est une tringle en polyamide aromatique, ladite tringle permettant de résister aux efforts d'une pression de gonflage égale à la pression de gonflage du pneumatique à l'intérieur duquel ledit corps est placé et facilitant la mise en place dans ledit pneumatique.

17. Corps (30) de géométrie torique selon l'une des revendications 10 à 16 **caractérisé en ce que** les moyens pour imposer audit corps (30) une forme géométrique consistent en une ossature (40, 400), de rigidités appropriées, placée à l'intérieur de la peau (31) tout en étant indépendante de ladite peau (31), cette forme géométrique délimitant un volume de cavité au moins égal au tiers du volume interne du pneumatique (10) dans lequel le corps (30) est destiné à être placé.

18. Corps (30) de géométrie torique selon la revendication 17 **caractérisé en ce que** l'ossature (40, 400) comprend au moins une armature circonférentielle (41, 41', 41") de rigidité appropriée pour imposer à la peau (31) une dimension circonférentielle déterminée et, solidaires de ladite armature circonférentielle (41, 41', 41"), une pluralité d'arceaux transversaux (42) imposant leur forme au corps (30) dans la direction transversale.

19. Corps (30) de géométrie torique selon la revendication 17 **caractérisé en ce que** l'ossature (40) comprend deux armatures circonférentielles (41', 41") de rigidité appropriée pour imposer à la peau (31) une dimension circonférentielle déterminée en deux points axialement distincts, ces deux armatures circonférentielles (41', 41") étant reliées par au moins un arceau (42) dont la fonction est de maintenir axialement écartées lesdites deux armatures.

20. Corps (30) de géométrie torique selon la revendication 17 **caractérisé en ce que** l'ossature (400) est constitué par au moins un ressort annulaire (401) à base torique conférant à la peau (31) sa forme de tore.

## Claims

1. An assembly (1) formed of a tubeless tyre (10) mounted on a mounting rim (20), this tyre having two beads (11) designed to cooperate with the mounting rim (20) comprising edges for limiting the axial distance between the beads of the tyre, this tyre having furthermore a crown (13) and sidewalls (12) connecting the beads (11) to the crown, this tyre defining with the mounting rim (20) a cavity inside which there is placed a body (30) toric in form and defining, when the tyre is inflated, a cavity inside said body (30) and an outer cavity with the tyre, the inner and outer cavities intercommunicating in such a way that the body (30) is not subject to any inflation force in normal use (i.e. tyre inflated to its utilisation pressure), this body (30) comprising a skin (31), of resilient elastomeric material capable of deformation, reinforced by a carcass reinforcement (311) anchored to two inextensible circumferential reinforcement structures (33), whose internal diameter is less than the maximum diameter of the rim (20), this carcass reinforcement (311) being capable of withstanding the forces applied by an inflation pressure corresponding to the rated inflation pressure of the tyre inside which the body (30) is placed, this body (30) being **characterised in that**, in the presence of a puncture (100) in the tyre, the skin (31) deforms, at least locally and virtually instantaneously, in order to block at least temporarily the puncture (100) so as to limit, at least temporarily, the loss of inflation pressure in the outer cavity between the tyre and the body, and to ensure transition to a state of equilibrium in which the body (30) is deformed and serves as a support for the tyre (10) after complete loss of pressure in the outer cavity.

2. An assembly (1) according to claim 1, **characterised in that** the body (30) is a closed torus provided with at least one opening for communication between the inner and outer cavities.

3. An assembly (1) according to claim 1, **characterised in that** the body (30) is a torus which is open substantially axially between the inextensible circumferential reinforcement structures (33) of said body.

4. An assembly (1) according to any one of claims 1 to 3, **characterised in that** the carcass reinforcement (311) of the body (30) comprises at least two plies each formed of a plurality of reinforcement elements, in the form of textile cords or cables, forming, in the radially outermost part of the body, angles of at least 25° with the circumferential direction, the reinforcement elements of the plies being crossed over one another.

5. An assembly (1) according to claim 4, **characterised in that** the reinforcements of the carcass reinforcement (311) of the body (30) are cords or cables of aromatic polyamide.

6. An assembly (1) according to any one of claims 1 to 5, **characterised in that** the body (30) comprises a crown part (34) radially towards the outside, said crown part comprising a reinforcement structure (341) formed of a plurality of reinforcements in the form of continuous or discontinuous cords or cables.

7. An assembly (1) according to claim 6, **characterised in that** the reinforcement structure of the crown part (34) of the body (30) comprises a plurality of reinforcements disposed in a direction forming an angle of at most 10° with the circumferential direction.

8. An assembly (1) according to any one of claims 1 to 7, **characterised in that** the body (30) comprises a framework (40, 400) placed inside said body and independent of said body, said framework having the function of causing the body (30) to adopt a form defining an inner cavity volume at least equal to one third of the maximum cavity volume defined by the tyre (10) and its mounting rim (20).

9. An assembly (1) according to claim 8, **characterised in that** the framework (40) comprises at least one circumferential band (41) of a rigidity appropriate for imparting to the body (30) a circumferential length appropriate to said body and, firmly connected to said band (41), a plurality of bows (42) imparting their shape to the body (30) in the transverse direction.

10. A body (30) of toric geometry around an axis of rotation and designed to be placed inside an assembly formed of a tyre (10) mounted on a mounting rim (20) so as to seal any puncture (100) which said tyre (10) may suffer and to reduce the rate at which pressure is lost in the tyre while providing said tyre with an inflated support, this body (30) comprising a skin (31), of resilient elastomeric material, reinforced by a carcass reinforcement (311) anchored to two inextensible circumferential reinforcement structures (33) incorporated in said skin (31), these inextensible structures (33) having an internal diameter of less than the maximum diameter of the rim (20), this carcass reinforcement (311) being capable of withstanding the forces applied by an inflation pressure corresponding to the rated inflation pressure of the tyre inside which the body (30) is placed, this body being such that under the action of local pressure less or equal to 0.1 bar, said body (30) comes virtually instantaneously into contact with the tyre (10) at the site of the puncture (100), said body (30) is capable of withstanding an inflation pressure equal to that of the tyre (10) in which it is intended to be placed, this body being **characterised in that** the body (30) is a closed torus whose skin (31) is provided with at least one small opening, said opening being located radially to the inside of the inextensible circumferential reinforcement structures (33) providing anchorage for the carcass reinforcement (311).

11. A body (30) of toric geometry according to claim 10, **characterised in that** the body (30) is a torus open axially between the inextensible circumferential reinforcement structures (33) providing anchorage for the carcass reinforcement (311).

12. A body (30) of toric geometry according to any one of claims 10 to 11, **characterised in that** the carcass reinforcement (311) of the body (30) comprises at least two plies each formed of a plurality of reinforcement elements, in the form of textile cords or cables, oriented on the inflated body in directions forming angles of at least 25° with the circumferential direction, the reinforcement elements of the stacks being crossed over one another.

13. A body (30) of toric geometry according to claim 12, **characterised in that** the reinforcements of the carcass reinforcement (311) of the body are cords or cables of aromatic polyamide.

14. A body (30) of toric geometry according to any one of claims 10 to 13, **characterised in that** the body (30) comprises a crown part (34) radially towards the outside, said crown part comprising a reinforcement structure (341) formed of a plurality of reinforcements in the form of continuous or discontinuous cords or cables.

15. A body (30) of toric geometry according to claim 14, **characterised in that** the reinforcement structure of the crown part (34) of the body (30) comprises a plurality of reinforcements disposed in a direction forming an angle of at most 10° with the circumferential direction.

16. A body (30) of toric geometry according to any one of claims 10 to 15, **characterised in that** each inextensible circumferential reinforcement structure (33) is a bead wire of aromatic polyamide, said bead wire making it possible to withstand the forces applied by an inflation pressure equal to the inflation pressure of the tyre inside which said body is placed, while facilitating positioning.

17. A body (30) of toric geometry according to any one of claims 10 to 16, **characterised in that** the means of imparting a geometric shape to said body (30) consist of a framework (40, 400), of appropriate rigidity, placed inside the skin (31) while being independent of said skin (31), this geometric shape defining a cavity volume at least equal to one third of the internal volume of the tyre (10) in which the body(30) is intended to be placed.

18. A body (30) of toric geometry according to claim 17, **characterised in that** the framework (40, 400) comprises at least one circumferential structure (41, 41', 41 ") of suitable rigidity for imparting to the skin (31) a given circumferential dimension and, firmly connected to said circumferential structure (41, 41', 41 "), a plurality of transverse bows (42) imparting their shape to the body (30) in the transverse direction.

19. A body (30) of toric geometry according to claim 17, **characterised in that** the framework (40) comprises two circumferential structures (41', 41 ") of suitable rigidity for imparting to the skin (31) a given circumferential dimension at two axially distinct points, these two circumferential structures (41', 41 ") being connected by at least one bow (42) whose function is to hold said two structures axially apart.

20. A body (30) of toric geometry according to claim 17, **characterised in that** the framework (400) consists of at least one toric base annular spring (401) imparting its toric shape to the skin (31).

## Patentansprüche

1. Einheit (1) bestehend aus einem schlauchlosen Luftreifen (10) ("tubeless"), der auf eine Montagefelge (20) montiert ist, wobei dieser Luftreifen zwei Wülste (11) hat, die dazu bestimmt sind, mit der Montagefelge (20) zusammenzuwirken, die Ränder aufweist, um den axialen Abstand zwischen den Wülsten des Luftreifens zu begrenzen, wobei dieser Luftreifen außerdem einen Scheitel (13) und Flanken (12) hat, die die Wülste (11) mit dem Scheitel verbinden, wobei dieser Luftreifen mit der Montagefelge (20) einen Hohlraum begrenzt, in dessen Innerem ein Körper (30) von allgemeiner Torusform angeordnet ist, der, wenn der Luftreifen aufgepumpt ist, einen Hohlraum innerhalb des Körpers (30) und einen äußeren Hohlraum mit dem Luftreifen bildet, wobei der innere und der äußere Hohlraum so miteinander in Verbindung stehen, dass der Körper (30) bei normaler Nutzung (d.h. Luftreifen auf seinen Nutzluftdruck aufgepumpt) keiner Aufpumpkraft ausgesetzt ist, wobei dieser Körper (30) eine Haut (31) aus verformbarem Elastomermaterial verstärkt durch eine Karkassenbewehrung (311) aufweist, die an zwei nicht dehnbaren Umfangsverstärkungsbewehrungen (33) verankert ist, deren Innendurchmesser kleiner ist als der maximale Durchmesser der Felge (20), wobei diese Karkassenbewehrung (311) fähig ist, den Kräften eines Reifendrucks entsprechend dem Nennreifendruck des Luftreifens zu widerstehen, in dessen Innerem der Körper (30) angeordnet ist, wobei dieser Körper (30) **dadurch gekennzeichnet ist, dass** die Haut (31) sich in Gegenwart einer Perforation (100) des Luftreifens zumindest lokal und praktisch sofort verformt, um zumindest zeitweise die Perforation (100) zu verschließen, um so zumindest zeitweise den Reifendruckverlust in dem äußeren Hohlraum zwischen dem Luftreifen und dem Körper zu begrenzen und einen Übergang in einen Gleichgewichtszustand zu gewährleisten, in dem der Körper (30) verformt ist und nach vollständigem Verlust des Drucks im äußeren Hohlraum als Träger für den Luftreifen (10) dient.

2. Einheit (1) nach Anspruch 1, **dadurch gekennzeichnet, dass** der Körper (30) ein geschlossener Torus ist, der mit mindestens einer Öffnung versehen ist, um den inneren und äußeren Hohlraum zu verbinden.

3. Einheit (1) nach Anspruch 1, **dadurch gekennzeichnet, dass** der Körper (30) ein im Wesentlichen axial zwischen den nicht dehnbaren Umfangsverstärkungsbewehrungen (33) des Körpers offener Torus ist.

4. Einheit (1) nach einem der Ansprüche 1 bis 3, **dadurch gekennzeichnet, dass** die Karkassenbewehrung (311) des Körpers (30) mindestens zwei Lagen aufweist, die je von mehreren Verstärkungselementen in Form von Textilfasern oder Textilcorden geformt werden, die im radial am weitesten außen liegenden Bereich des Körpers Winkel mindestens gleich 25° mit der Umfangsrichtung bilden, wobei die Verstärkungselemente der Lagen zueinander gekreuzt sind.

5. Einheit (1) nach Anspruch 4, **dadurch gekennzeichnet, dass** die Verstärkungen der Karkassenbewehrung (311) des Körpers (30) Fasern oder Corde aus aromatischem Polyamid sind.

6. Einheit (1) nach einem der Ansprüche 1 bis 5, **dadurch gekennzeichnet, dass** der Körper (30) einen Scheitelbereich (34) radial nach außen aufweist, wobei der Scheitelbereich eine Verstärkungsbewehrung (341) aufweist, die von mehreren Verstärkungen in Form von durchgehenden oder nicht durchgehenden Fasern oder Corden gebildet wird.

7. Einheit (1) nach Anspruch 6, **dadurch gekennzeichnet, dass** die Verstärkungsbewehrung des Scheitelbereichs (34) des Körpers (30) mehrere Verstärkungen aufweist, die in einer Richtung angeordnet sind, die einen Winkel höchstens gleich 10° mit der Umfangsrichtung bilden.

8. Einheit (1) nach einem der Ansprüche 1 bis 7, **dadurch gekennzeichnet, dass** der Körper (30) ein Gerippe (40, 400) aufweist, das im Inneren des Körpers angeordnet und von dem Körper unabhängig ist, wobei das Gerippe die Funktion hat, den Körper (30) eine Form annehmen zu lassen, die ein inneres Hohlraumvolumen mindestens gleich dem Drittel des Volumens des vom Luftreifen (10) und seiner Montagefelge (20) begrenzten maximalen Hohlraums begrenzt.

9. Einheit (1) nach Anspruch 8, **dadurch gekennzeichnet, dass** das Gerippe (40) mindestens ein Umfangsband (41) mit geeigneter Steifheit, um dem Körper (30) eine für den Körper geeignete Umfangslänge zu verleihen, und fest mit dem Band (41) verbunden mehrere Bügel (42) aufweist, die ihre Form dem Körper (30) in Querrichtung aufzwingen.

10. Körper (30) mit Torusgeometrie um eine Drehachse und dazu bestimmt, im Inneren einer Einheit angeordnet zu werden, die von einem auf eine Montagefelge (20) montierten Luftreifen (10) geformt wird, um eine mögliche Perforation (100) des Luftreifens (10) zu verschließen und die Geschwindigkeit des Druckverlusts im Luftreifen zu verringern, bei gleichzeitiger Gewährleistung eines aufgepumpten Trägers des Luftreifens, wobei dieser Körper (30) eine Haut (31) aus elastischem Elastomermaterial aufweist, die von einer Karkassenbewehrung (311) verstärkt wird, die an zwei nicht dehnbaren Umfangsverstärkungsbewehrungen (33) verankert ist, die in die Haut (31) integriert sind, wobei diese nicht dehnbaren Bewehrungen (33) einen Innendurchmesser kleiner als der maximale Durchmesser der Felge (20) haben, wobei diese Karkassenbewehrung (311) in der Lage ist, den Kräften eines Reifendrucks zu widerstehen, der dem Nennreifendruck des Luftreifens entspricht, in dessen Innerem der Körper (30) angeordnet ist, wobei dieser Körper so ist, dass der Körper (30) unter der Wirkung eines lokalen Drucks geringer als oder gleich 0,1 Bar praktisch sofort mit dem Luftreifen (10) an der Stelle der Perforation (100) in Kontakt kommt, wobei der Körper (30) fähig ist, einem Reifendruck gleich demjenigen des Luftreifens (10) zu widerstehen, in dem er angeordnet werden soll, wobei dieser Körper **dadurch gekennzeichnet ist, dass** der Körper (30) ein geschlossener Torus ist, dessen Haut (31) mit mindestens einer Öffnung von reduzierter Abmessung versehen ist, wobei diese Öffnung radial im Inneren der nicht dehnbaren Umfangsverstärkungsbewehrungen (33) lokalisiert ist, die als Verankerung für die Karkassenbewehrung (311) dienen.

11. Körper (30) mit Torusgeometrie nach Anspruch 10, **dadurch gekennzeichnet, dass** der Körper (30) ein zwischen den nicht dehnbaren Umfangsverstärkungsbewehrungen (33), die zur Verankerung der Karkassenbewehrung (311) dienen, axial offener Torus ist.

12. Körper (30) mit Torusgeometrie nach einem der Ansprüche 10 oder 11, **dadurch gekennzeichnet, dass** die Karkassenbewehrung (311) des Körpers (30) mindestens zwei Lagen aufweist, die je von mehreren Verstärkungselementen in Form von Textilfasern oder Textilcorden gebildet werden, die auf dem aufgepumpten Körper in Richtungen ausgerichtet sind, die mit der Umfangsrichtung Winkel mindestens gleich 25° bilden, wobei die Verstärkungselemente der Schichtungen zueinander gekreuzt sind.

13. Körper (30) mit Torusgeometrie nach Anspruch 12, **dadurch gekennzeichnet, dass** die Verstärkungen der Karkassenbewehrung (311) des Körpers Fasern oder Corde aus aromatischem Polyamid sind.

14. Körper (30) mit Torusgeometrie nach einem der Ansprüche 10 bis 13, **dadurch gekennzeichnet, dass** der Körper (30) einen Scheitelbereich (34) radial nach außen aufweist, wobei der Scheitelbereich eine Verstärkungsbewehrung (341) aufweist, die von mehreren Verstärkungen in Form von durchgehenden oder nicht durchgehenden Fasern oder Corden geformt wird.

15. Körper (30) mit Torusgeometrie nach Anspruch 14, **dadurch gekennzeichnet, dass** die Verstärkungsbewehrung des Scheitelbereichs (34) des Körpers (30) mehrere Verstärkungen aufweist, die in einer Richtung angeordnet sind, die einen Winkel von höchstens 10° mit der Umfangsrichtung bildet.

16. Körper (30) mit Torusgeometrie nach einem der Ansprüche 10 bis 15, **dadurch gekennzeichnet, dass** jede nicht dehnbare Umfangsverstärkungsbewehrung (33) ein Stab aus aromatischem Polyamid ist, wobei der Stab es ermöglicht, den Kräften eines Reifendrucks gleich dem Reifendruck des Luftreifens zu widerstehen, in dessen Innerem der Körper angeordnet ist, und das Einsetzen in den Luftreifen erleichtert.

17. Körper (30) mit Torusgeometrie nach einem der Ansprüche 10 bis 16, **dadurch gekennzeichnet, dass** die Mittel, um dem Körper (30) eine geometrische Form aufzuzwingen, aus einem Gerippe (40, 400) mit geeigneten Steifheiten bestehen, das im Inneren der Haut (31) angeordnet, aber unabhängig von der Haut (31) ist, wobei diese geometrische Form ein Hohlraumvolumen begrenzt, das mindestens gleich dem Drittel des Innenvolumens des Luftreifens (10) ist, in dem der Körper (30) angeordnet werden soll.

18. Körper (30) mit Torusgeometrie nach Anspruch 17, **dadurch gekennzeichnet, dass** das Gerippe (40, 400) mindestens eine Umfangsbewehrung (41, 41', 41") mit geeigneter Steifheit, um der Haut (31) eine bestimmte Umfangsabmessung aufzuzwingen, und fest mit der Umfangsbewehrung (41, 41', 41") verbunden mehrere Querbügel (42) aufweist, die ihre Form dem Körper (30) in Querrichtung aufzwingen.

19. Körper (30) mit Torusgeometrie nach Anspruch 17, **dadurch gekennzeichnet, dass** das Gerippe (40) zwei Umfangsbewehrungen (41', 41") mit geeigneter Steifheit aufweist, um der Haut (31) eine bestimmte Umfangsabmessung an zwei axial unterschiedlichen Punkten aufzuzwingen, wobei diese zwei Umfangsbewehrungen (41', 41") durch mindestens einen Bügel (42) verbunden werden, dessen Funktion es ist, die zwei Bewehrungen axial in Abstand zu halten.

20. Körper (30) mit Torusgeometrie nach Anspruch 17, **dadurch gekennzeichnet, dass** das Gerippe (400) aus mindestens einer ringförmigen Feder (401) mit torusförmiger Basis besteht, die der Haut (31) ihre Torusform verleiht.
